# FASCICULE DE BREVET EUROPEEN

(11) **EP 2 177 373 B1**
(45) Date de publication et mention de la délivrance du brevet: **18.04.2012**
(21) Numéro de dépôt: 09012943.8
(22) Date de dépôt: 13.10.2009
(51) Int. Cl.: B60B 27/02, F16C 19/02

(54) **Dispositif de montage de roulements et moyeu de roue de bicyclette incluant ledit dispositif**
Radlager-Montagevorrichtung und Fahrradnabe, die eine solche Vorrichtung einschließt
Device for installing bearings and bicycle wheel hub including said device

(30) Priorité: 20.10.2008 FR 0805804
(43) Date de publication de la demande: 21.04.2010
(73) Titulaire: MAVIC S.A.S., 74370 Metz-Tessy (FR)
(72) Inventeur: Veux, Jean-Luc, 74150 Rumlily (FR)

(56) Documents cités:
- DE-U1- 20 108 155
- DE-U1-202006 006 548
- DE-U1-202007 005 699

## Description

La présente invention concerne le montage des paliers à roulements, qu'ils s'agissent de paliers à roulements à contact oblique ou radiaux. En particulier la présente invention concerne le montage des paliers à roulements dans un moyeu de cycle.

L'utilisation des paliers à roulements est largement connue dans le domaine des cycles. En règle générale, un palier à roulement comprend une bague intérieure qui s'ajuste sur l'arbre, une bague extérieure qui se positionne dans le logement de la pièce destinée à tourner autour de l'arbre et des éléments roulants, lesquels peuvent être des billes ou des rouleaux de forme diverses. La mise en place de paliers à roulements nécessite diverses opérations d'usinage, pour préparer les surfaces qui recevront les bagues de roulement. Ces diverses opérations d'usinage sont longues et coûteuses. D'autre part, pour obtenir un montage de paliers à roulements précis il est nécessaire de régler le jeu à l'intérieur du roulement. Une solution classique pour le réglage du jeu du roulement consiste à utiliser un écrou de réglage de jeu.

Pour pouvoir utiliser un écrou de réglage de jeu, il est nécessaire de ménager une surface filetée sur l'arbre. L'opération de filetage de l'arbre est également une opération délicate, longue et coûteuse à réaliser. Le réglage du jeu de roulement à l'aide d'un écrou de réglage présente de nombreux désavantages. Tout d'abord il est nécessaire de réaliser un écrou de réglage, qui est une pièce usinée complexe. De plus l'opération de réglage du jeu à l'aide de l'écrou est une opération complexe nécessitant un très grand savoir faire dans la mesure où un utilisateur non professionnel pourrait serrer trop fort l'écrou occasionnant ainsi trop de frottement à l'intérieur du palier à roulement, voire trop de pression ce qui entraînerait une dégradation irréversible du roulement. D'un autre coté, l'utilisation d'un écrou de réglage n'est pas une solution satisfaisante dans la mesure où cet écrou est susceptible de se desserrer ce qui rend nécessaire une nouvelle opération de réglage du jeu.

DE 20 2007 005 699 U décrit le préambule de la revendication 1.

L'objectif de la présente invention est la fourniture d'un dispositif de montage de roulement qui permette de simplifier le réglage du jeu.

Un autre objectif de la présente invention est la fourniture d'un dispositif permettant le montage d'un palier à roulement dans lequel le réglage du jeu se fait de manière automatique.

Un autre objectif de la présente invention est la fourniture d'un moyeu pour roue de bicyclette, comportant des moyens de réglage du jeu des paliers de roulement, lesquels moyens de réglage assurant un auto-réglage du jeu, ne nécessitant pas l'intervention de l'utilisateur.

Un autre objectif de la présente invention est de diminuer le coût d'obtention des moyeux pour des roues de bicyclettes.

Les objectifs de l'invention sont atteints par la fourniture d'un dispositif comportant un arbre interne et un corps extérieur monté rotatif autour d'un axe "A" par rapport audit arbre par l'intermédiaire d'au moins un palier à roulement, ledit palier à roulement comprenant une bague intérieure montée sur ledit arbre interne et une bague extérieure montée dans un logement dudit corps extérieur, lequel dispositif comprend des moyens d'auto-rattrapage de jeu comprenant une rondelle comportant une face conique, et un élément élastique placé au contact de ladite face conique de la première rondelle, ladite épingle élastique générant un effort de rappel radial qui est converti, par l'intermédiaire de la face conique, en un effort axial pour assurer le rattrapage de jeu du montage dudit palier à roulement.

Dans une version de l'invention, ladite première rondelle est montée sur l'arbre et ledit élément élastique génère une force de rappel centripète.

Dans une autre version de l'invention, ladite première rondelle est montée dans l'alésage du corps extérieur et ledit élément élastique génère une force de rappel centrifuge.

De préférence, les moyens d'auto-rattrapage de jeu comprennent une deuxième rondelle et ledit élément élastique est placé entre ladite première rondelle et ladite deuxième rondelle.

Dans le dispositif selon l'invention, il y a irréversibilité ou quasi-irréversibilté de la conversion de l'effort radial qu'exerce l'élément élastique en un effort axial.

De préférence, l'angle que fait la face conique avec le plan perpendiculaire à l'axe "A" est inférieur à 12°.

L'objectif de l'invention est également atteint par la fourniture d'un moyeu pour roue de bicyclette incluant le dispositif de montage de roulements comprenant des moyens d'auto-rattrapage du jeu, ainsi que par une roue de bicyclette incluant un tel moyeu.
La figure 1 est une coupe d'un moyeu de roue de cycle selon l'art antérieur.
La figure 2 est une vue générale d'une roue de cycle selon l'invention.
La figure 3 est une vue en coupe d'un moyeu de cycle selon l'invention.
La figure 4 est une vue éclatée de la figure 3.
Les figures 5, 6 et 7 sont des vues de détail du moyeu selon l'invention.
La figure 8 est une vue de détail montrant un second mode de réalisation de l'invention.
La figure 9 est une vue de détail montrant un troisième mode de réalisation de l'invention.
La figure 10 est une vue de face de l'épingle du premier mode de réalisation de l'invention.
La figure 11 est une vue en perspective d'une épingle selon une variante de réalisation de l'invention.
La figure 12 est une vue en perspective d'une épingle selon une autre variante de réalisation de l'invention.
La figure 13 est une vue en perspective d'une épingle selon une autre variante de l'utilisation.
La figure 14 est une vue en perspective d'une épingle selon une autre variante de l'utilisation.

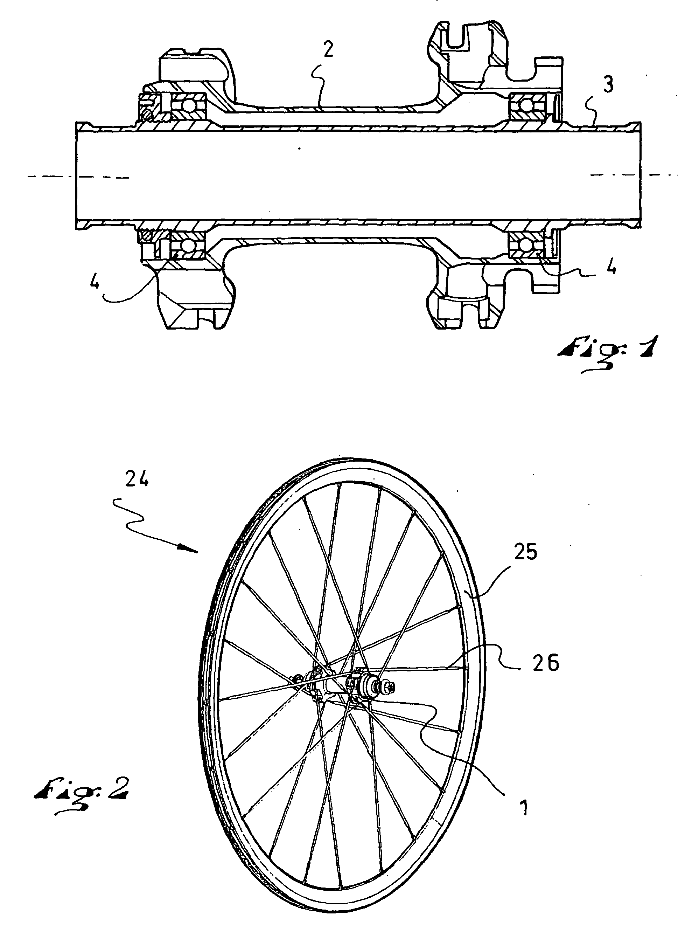

La figure 1 montre en coupe un moyeu pour roue de cycle selon l'art antérieur. Celui-ci comprend un corps extérieur 2 et un arbre interne 3. Le corps extérieur 2 est monté rotatif sur l'arbre interne 3 par l'intermédiaire de deux roulements 4. Le corps extérieur 2 comprend deux flasques servant à la fixation des rayons. Au niveau de chacun de ces flasques est ménagé un logement destiné à recevoir les bagues extérieures des roulements 4. L'arbre interne 3 est usiné dans la masse, par exemple dans une barre d'aluminium, de façon à pouvoir réaliser l'épaulement de butée de roulement, ainsi que les portées de roulement et le filetage pour recevoir l'écrou de réglage. L'usinage dans la masse ainsi que les nombreuses opérations d'usinage et de reprise font que cet arbre interne est complexe et coûteux à obtenir. De plus, la tendance actuelle va vers une augmentation du diamètre de l'arbre interne. Alors que celui-ci faisait en général environ 10 mm, il n'est pas rare de voir les arbres internes de diamètre 15 mm ou plus. Bien entendu on comprendra aisément qu'un arbre interne usiné dans la masse sera d'autant plus cher qu'il sera de diamètre élevé.

L'écrou de réglage du jeu est également une pièce complexe à réaliser car elle est usinée. D'autre part l'opération de réglage du jeu est une opération délicate car le jeu doit être calculé au plus juste. Un jeu trop important génère un mouvement relatif entre l'arbre et le corps extérieur tandis qu'un jeu trop faible risque, à terme, d'abîmer les roulements.

La figure 2 décrit une roue de cycle 24 selon l'invention. Elle est constituée d'une jante 25 et d'un moyeu 1 entre lesquels sont tendus les rayons 26.

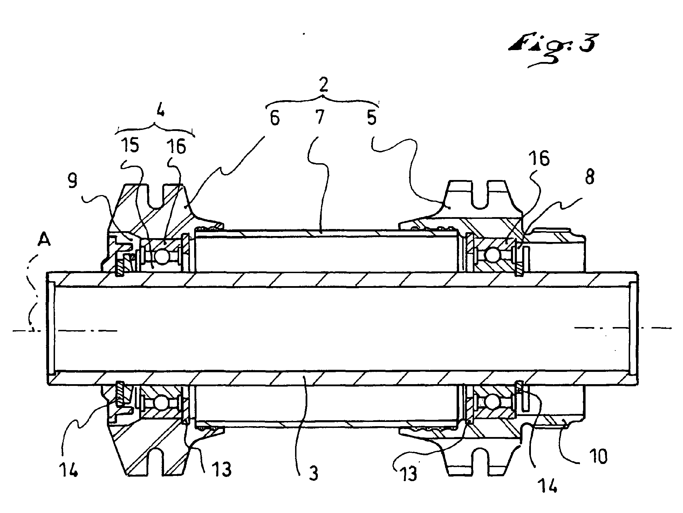

La figure 3 décrit une vue en coupe d'un moyeu selon un premier mode de réalisation de l'invention. Le moyeu comprend un arbre interne 3 d'axe A et un corps extérieur 2 qui est montée rotatif autour de l'arbre interne 3. Le corps extérieur 2 est constitué par l'assemblage de trois sous-éléments : un flasque gauche 6, un cylindre 7 et un flasque droit 5. Chacun des deux flasques, le gauche 6 et le droit 5, est réalisé par filage et usinage dans un matériau tel que l'aluminium. Le cylindre 7 peut quant à lui être réalisé dans le même matériau que les flasques, mais il peut également être réalisé dans un matériau composite tel que carbone. La fabrication du corps extérieur 2 en trois sous-éléments n'est bien entendu pas une caractéristique limitative de l'invention. On pourra également envisager la réalisation d'un corps extérieur en une seule partie comme cela est le cas dans l'art antérieur.

Les deux flasques 6 et 5 sont collés sur le cylindre 7. Ils sont percés de créneaux servant à la fixation des rayons. Bien entendu, il ne s'agit pas là d'une caractéristique limitative de l'invention et tout moyen équivalent de fixation des flasques sur le cylindre sont envisageables. Nous n'entrerons pas dans cette description dans le détail de la fixation des rayons sur les flasques.

Dans chacun des flasques gauche 6 et flasque droit 5, des logements 8 et 9 sont ménagés pour recevoir les bagues extérieures 16 des roulements 4. De préférence, les bagues extérieures sont montées dans les logements avec des ajustements serrés.

Le flasque droit 5 se prolonge vers la droite par un fût cannelé 10 pour la fixation d'un disque de frein. Celui-ci à un diamètre interne plus petit que le diamètre du logement droit 9. Il est ainsi créé un épaulement contre lequel la bague extérieure 16 vient s'appuyer. Pour maintenir la bague extérieure en place une butée élastique à force de rappel centrifuge, appelée également circlips intérieur 13, est placée contre la bague extérieure 16.

La bague extérieure 16 placée dans le logement gauche 9 est maintenue contre un deuxième circlips intérieur 13.

Les bagues intérieures 15 sont, quant à elles, montées sur l'arbre interne 3 avec un ajustement libre permettant un déplacement axial. La bague intérieure 15 placée dans la partie droite du moyeu est maintenue contre une butée élastique à force de rappel centripète, appelée circlips extérieur 14.

La bague intérieure 15 placée dans la partie gauche du moyeu est également maintenue contre un circlips extérieur 14, à la différence près que des moyens d'auto-rattrapage de jeu s'intercalent entre le circlips extérieur 14 et la bague intérieure 15.

Dans la pratique le montage de l'arbre interne 3 dans le corps extérieur se déroule de la façon suivante. Un premier roulement est inséré par la gauche dans le logement droit 8 contre l'épaulement. On place ensuite un premier circlips intérieur 13, contre la bague extérieure de ce premier roulement. Un deuxième circlips intérieur 13 est alors mis en place dans une gorge ménagée dans le logement gauche 9. Ce circlips intérieur 13 sert de butée axiale pour le deuxième roulement, lequel est également inséré par la gauche à l'intérieur du flasque gauche. L'arbre interne 3, à l'extrémité droite duquel on a mis en place un premier circlips extérieur est, par la suite, glissé à l'intérieur du moyeu jusqu'à ce que ce premier circlips extérieur vienne en butée contre la bague intérieure du roulement droit. On glisse enfin les composants des moyens d'auto-rattrapage de jeu sur l'extrémité gauche de l'arbre interne 3.

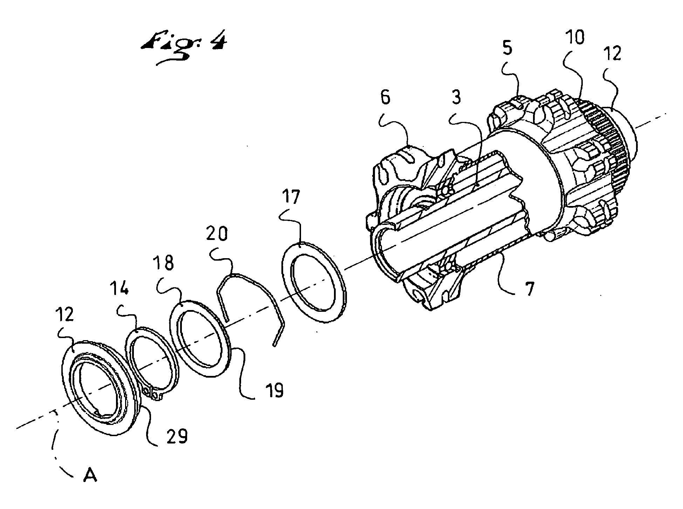

La figure 4 décrit en perspective éclatée le moyeu selon l'invention partiellement assemblé, et en particulier on peut y voir l'agencement des différents composants des moyens d'auto-rattrapage de jeu. Ceux-ci sont constitués par une première rondelle, qui est une rondelle conique 18, une deuxième rondelle, qui est une rondelle plate 17 et un élément élastique 20.

La rondelle plate 17 est glissée sur l'arbre interne jusqu'à venir en butée contre la bague intérieure du roulement gauche. La rondelle conique 18, qui comprend au moins une face conique 19, est également glissée sur l'arbre interne de telle façon que la face conique 19 soit dirigée vers la bague interne du roulement de gauche. Dans l'exemple décrit, les rondelles sont réalisées en acier. Un élément élastique 20 est inséré entre la rondelle plate 17 et la rondelle conique 18.

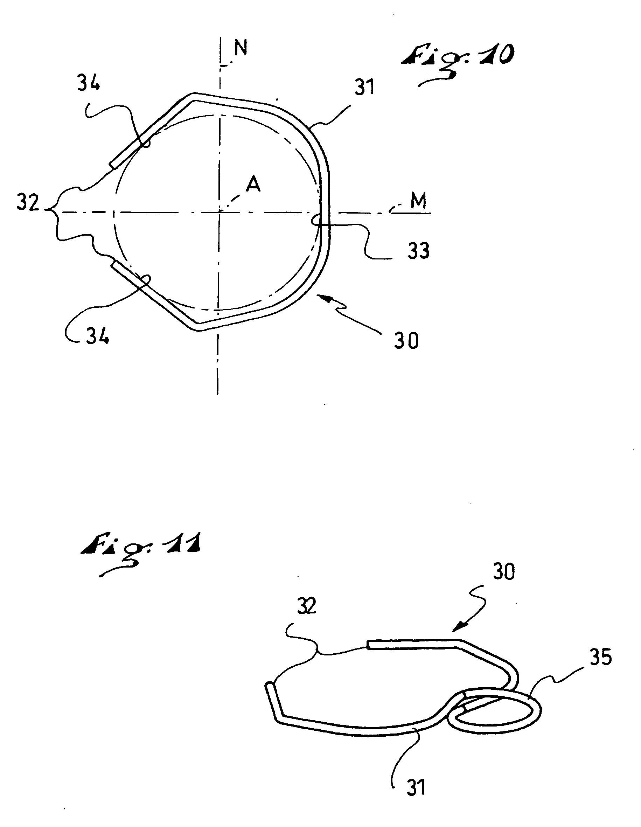

Dans le premier mode de réalisation de l'invention, l'élément élastique se présente sous la forme d'une épingle 30 qui est représentée en vue de dessus à la figure 10. Celle-ci est réalisée dans un fil métallique replié qui au repos défini une épingle qui comporte une portion de forme sensiblement circulaire et formant un C dont le diamètre au repos est plus petit que le plus petit des diamètres qu'il pourra prendre au cours du fonctionnement normal des moyens d'auto-rattrapage de jeu. Ainsi, l'effort de rappel élastique radial s'exercera dans une direction centripète et aura tendance à faire se rapprocher les branches du C. Dans l'exemple décrit ici, l'épingle a un diamètre d'environ 20 mm.

Comme on peut le voir à la figure 10, l'épingle comporte une partie dorsale 31, qui constitue sensiblement une forme incurvée et de deux bras 32 qui ont une forme sensiblement rectiligne. La forme générale de l'épingle est telle que celle-ci a avec les rondelles trois points de contacts. L'un de ces contacts, appelé point de contact dorsal 33, est situé dans la partie dorsale 31, sur un axe médian "M" de l'épingle 30. Les deux autres contacts, appelés point de contacts frontaux 34, sont placés au niveau des bras 32 dans des positions respectivement symétriques l'une de l'autre par rapport à l'axe médian "M". Les points de contacts frontaux 34 peuvent changer de position sur les bras en fonction de l'écartement de l'épingle. Cependant, par rapport au point de contact dorsal 33, ils sont toujours placés, au-delà de l'axe normal "N", l'axe normal étant l'axe perpendiculaire à l'axe "M" passant par l'axe "A". Ainsi l'épingle 30 reste en position stable centrée sur l'axe "A" quelque soit son écartement.

L'épingle 30 est réalisée avec un fil métallique de diamètre compris entre 0,7 mm et 1 mm, de préférence environ égale à 0,8 mm. On peut tout à fait prendre une épingle réalisée dans un autre matériau, par exemple en matière plastique. D'autre part la section de l'épingle peut avoir n'importe quel contour.

Un deuxième circlips extérieur 14 est placé dans une gorge ménagée à la superficie de l'arbre interne 3 afin de maintenir les deux rondelles 18, 19 et l'épingle contre la bague interne du roulement.

Dans le premier mode de réalisation de l'invention, le montage des moyens d'auto-rattrapage du jeu sur l'arbre se déroule selon la séquence suivante: dans un premier temps on enfile les deux rondelles sur l'arbre et on met en place le deuxième circlips extérieur 14 dans la gorge destinée à le recevoir. Dans un deuxième temps on vient insérer l'épingle 30 entre les deux rondelles. Pour ce faire, l'épingle doit être écartée jusqu'à ce que son diamètre soit plus important que le diamètre extérieur de la rondelle conique 18. Il est important de noter que l'épingle 30 doit être dimensionnée de telle façon que lorsque, au moment du montage, elle est écartée pour pouvoir passer par-dessus la rondelle conique 18, les déformations qu'elle subit restent dans la zone élastique, et ne passent pas en zone plastique.

Un capuchon gauche 12 est enfilé sur l'extrémité gauche de l'arbre. Le capuchon empêche la pénétration de poussières dans le roulement. Le capuchon gauche 12 comprend une collerette cylindrique 29 qui fait saillie depuis le capuchon vers l'intérieur du moyeu et dont le diamètre est supérieur au diamètre extérieur de la rondelle conique et du diamètre maximal que sera susceptible d'atteindre l'élément élastique 20 à l'utilisation. La collerette cylindrique 29 à pour fonction de maintenir l'élément élastique en place entre les deux rondelles au cas où, accidentellement, le moyeu de la roue serait soumis à des efforts axiaux très importants, notamment des efforts axiaux supérieurs à ceux auxquels est soumis un moyeu de roue de bicyclette en utilisation normal.

Un capuchon droit 11 est également enfilé en force sur l'extrémité droite de l'arbre interne. Les capuchons 11, 12 peuvent être réalisés en matière plastique.

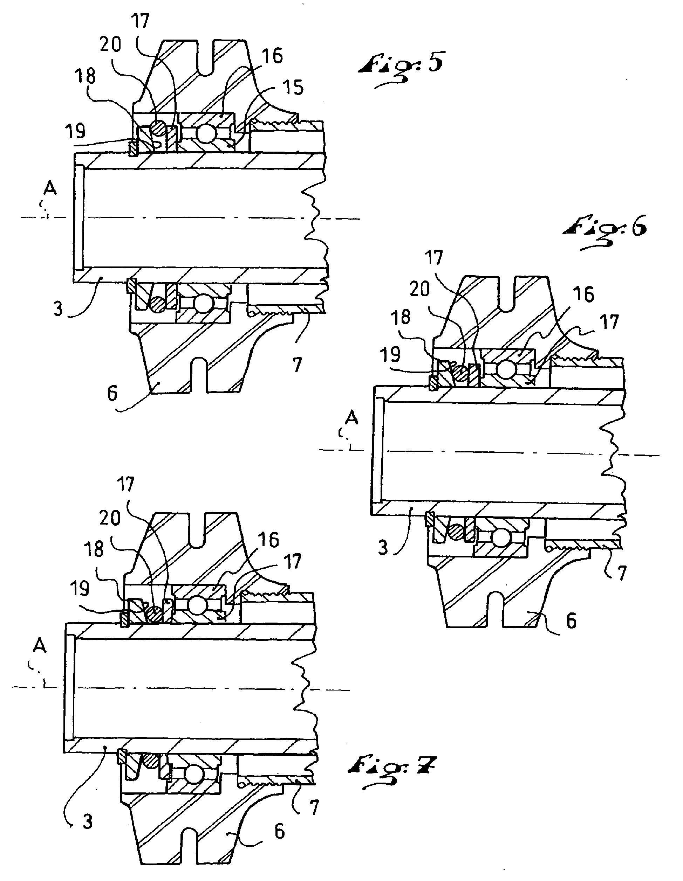

Les figures 5, 6 et 7 montrent de façon schématique le fonctionnement des moyens d'auto-rattrapage de jeu selon le premier mode de réalisation de l'invention. Ces figures sont schématiques dans la mesure où certains détails comme les contours du flasque ne sont pas repris à l'identique.

A la figure 5, l'épingle 30 est à l'état le plus ouvert. On se trouve dans la situation où il y a très peu de jeu à rattraper. Par exemple, cela peut être la disposition des moyens d'auto-rattrapage de jeu lors du montage du moyeu, en début de vie de celui-ci. L'épingle, dans cette position, atteint le diamètre maximal qu'elle prendra au cours du fonctionnement normal. Ce diamètre est environ égal à 25 mm. La force de rappel centripète qu'exerce l'épingle est alors maximale. La force de rappel radial qu'exerce l'épingle est convertie par l'intermédiaire de la face conique 19 de la rondelle conique 18 en un effort axial qui plaque la rondelle plate 17 contre la bague intérieure 15. Afin d'éviter d'endommager le roulement, il est important que l'effort axial maximal ne dépasse pas 20 daN. De préférence, pour le rattrapage de jeu, on choisi de dimensionner les composants pour l'effort axial maximal qu'exerceront les moyens d'auto-rattrapage de jeu soit inférieur à 1 daN. Pour cela, compte tenu de la pente de la face conique et des coefficients de frottement des contacts en jeu, c'est-à-dire le contact de l'élément élastique 20 avec les deux rondelles, on peut déterminer quel effort de rappel radial l'élément élastique 20 maximal doit être susceptible de fournir.

Dans l'exemple décrit ici, la pente de la face conique fait avec le plan perpendiculaire à l'axe A un angle de 12°, et l'épingle comme les rondelles sont réalisées en matériaux métallique. On peut donc en déduire quel est l'effort radial de rappel élastique que doit exercer l'élément élastique. En l'occurrence, ce dernier étant une épingle, elle a été dimensionnée de telle façon que l'effort de pincement - l'effort nécessaire pour écarter les deux branches du C ne dépasse pas 0,25 daN.

Avantageusement dans les moyens d'auto-rattrapage de jeu selon l'invention, il y a irréversibilité, ou quasi-irréversibilité, de la conversion de l'effort radial qu'exerce l'élément élastique 20 en un effort axial. En d'autres termes, il ne faut pas que, lorsqu'un effort axial est exercé, par exemple entre l'arbre interne et le corps extérieur, celui-ci soit converti à son tour, par le biais des moyens d'auto-rattrapage, en un effort radial, lequel aurait tendance à écarter l'épingle 30. On pourra cependant se satisfaire d'une quasi-irréversibilité, c'est-à-dire de ce que seuls les efforts axiaux inférieurs à une certaine valeur ne soient pas convertis en un écartement de l'épingle. Dans l'exemple décrit ici d'un moyeu pour roue de bicyclette, les efforts axiaux peuvent atteindre, lorsque la roue est montée sur le vélo, quelques dizaines de déca-newton. On s'arrangera donc pour que les moyens d'auto-rattrapage de jeu soient irréversibles tant que les efforts axiaux sont inférieurs à quelques centaines de déca-newton. Comte tenu des matériaux utilisés dans cet exemple, principalement l'acier, on obtient la quasi-irréversibilité désirée avec une face conique qui fait un angle de 12° par rapport au plan perpendiculaire à l'axe A.

A la figure 6, le roulement a pris un peu de jeu, mais celui-ci est automatiquement rattrapé par le resserrement de l'épingle à un diamètre inférieur à 25 mm.

A la figure 7, le roulement a encore pris du jeu, lequel est toujours automatiquement rattrapé par le resserrement de l'épingle 20. Dans cette disposition encore, le diamètre de l'épingle reste supérieur à celui qu'elle a lorsqu'elle est au repos, de façon qu'elle continu à exercer un effort radial. Ainsi, la rondelle plate continue d'être plaquée contre la bague intérieure avec un effort axial minimal suffisant. On estime que cet effort axial minimal ne doit être inférieur à 0,05 daN. Pour ce faire, il faut que lorsque l'épingle est dans sa position d'extension minimale, l'effort de rappel soit au moins supérieur à 0,01 daN.

Les figures 6 et 7 ont été décrites en considérant qu'elles représentaient le moyeu décrit à la figure 5 à différents moments dans le temps et montrant une évolution du jeu du roulement dans le temps. On peut également considérer que la figure 6, respectivement la figure 7, décrit un objet différent de celui de la figure 5, au sein d'un même lot de fabrication. En effet, dans la fabrication en série, toutes les pièces de même référence n'ont pas rigoureusement les mêmes dimensions. C'est pourquoi, au sein d'un même lot de fabrication, on pourra avoir des moyeux dont les moyens d'auto-rattrapage de jeu se trouvent dans la position montrée à la figure 5 et d'autres, dont les moyens d'auto-rattrapage de jeu se trouvent dans la position montrée à la figure 6, respectivement figure 7.

Avantageusement, les moyens d'auto-rattrapage de jeu selon l'invention permettent d'assurer le rattrapage automatique du jeu des roulements dans une plage de 0,5 mm avec une épingle réalisée avec un fil métallique de diamètre compris entre 0,7 mm et 1 mm, de préférence égal à 0,8 mm.

Bien entendu, les valeurs numériques sont données à titre explicatifs, elles sont liées aux dimensions du moyeu de bicyclette qui est décrit ici à titre d'exemple. Notamment, les valeurs de diamètre sont à prendre en considération en rapport avec le diamètre extérieur de l'arbre interne 3. Dans l'exemple décrit ici, ce diamètre est égal à 20 mm. D'autre part, pour des raisons de simplification, on a parlé dans ce qui précède, du diamètre de l'épingle, alors que cette dernière n'est pas rigoureusement circulaire. Il faut comprendre que le diamètre de l'épingle correspond au diamètre d'un cercle fictif qui passerait par les points de celle-ci qui sont au contact des rondelles.

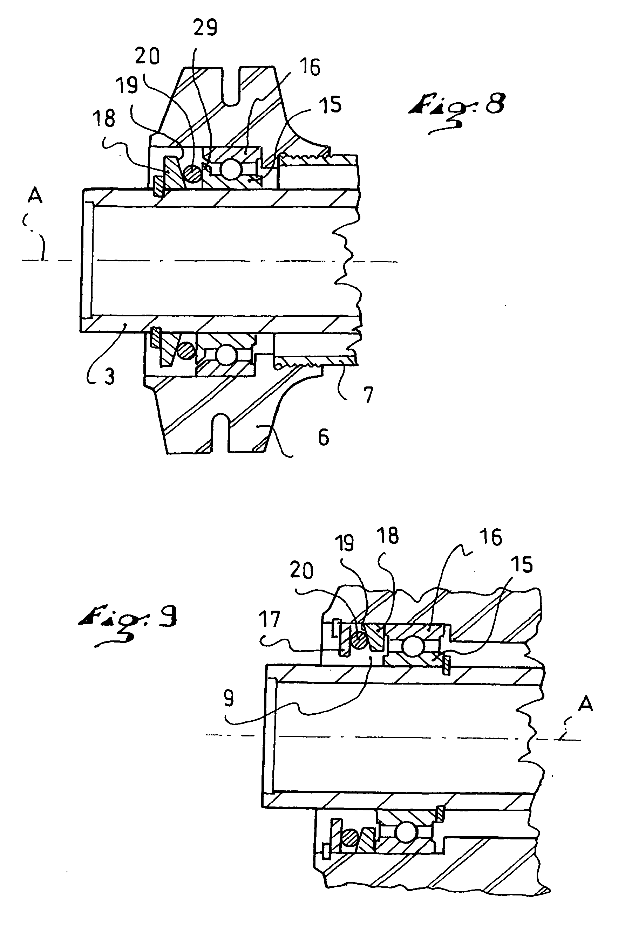

La figure 8 décrit partiellement un deuxième mode de réalisation de l'invention dans lequel les moyens d'auto-rattrapage de jeu sont constitués par une seule rondelle 18 et une épingle 20. La rondelle 18 comporte une face conique 19 qui interagit avec l'épingle pour convertir l'effort de rappel radial centripète de cette dernière en un effort axial. L'épingle 20 est directement au contact de la bague intérieure du roulement. La bague intérieure du roulement comprend d'ailleurs une lèvre 29 qui prolonge la bague intérieure pour garantir le contact avec l'épingle quelque soit son degré d'expansion.

Dans un mode de réalisation alternatif non représenté, la face conique est réalisée directement sur le circlips, ce qui rend superflu, l'utilisation de la rondelle.

La figure 9 décrit partiellement un troisième mode de réalisation de l'invention dans lequel les moyens d'auto-rattrapage de jeu ne sont plus appliqués contre la bague intérieure 15 du roulement mais contre la bague extérieure 16 de celui-ci. Les moyens d'auto-centrage sont alors constitués par une première rondelle 18 ayant une face conique 19 qui est insérée dans le logement 9 qui reçoit la bague extérieure 16 du roulement. Une deuxième rondelle 17, laquelle est plate, est également insérée dans le logement 9.

Entre les deux rondelles 17 et 18, une épingle élastique 20 prend place. L'épingle élastique 20 est réalisée dans un fil métallique replié qui au repos défini une épingle formant un C dont le diamètre au repos est plus grand que le plus grand des diamètres qu'il pourra prendre au cours du fonctionnement normal des moyens d'auto-rattrapage de jeu. Ainsi, l'effort de rappel élastique radial s'exercera dans une direction centrifuge et aura tendance à faire s'écarter les branches du C.

La figure 11 montre une épingle selon une variante de réalisation de l'invention. Comme pour l'épingle montrée à la figure 10, l'épingle 30 peut être réalisée à l'aide d'un fil métallique mais également en utilisant d'autres matériaux et selon des procédés différents. L'épingle comporte une partie dorsale 31, qui constitue sensiblement une forme incurvée et de deux bras 32 qui ont une forme sensiblement rectiligne. La forme générale de l'épingle est telle que celle-ci a avec les rondelles trois points de contacts. Cette épingle se caractérise par le fait que la partie dorsale 31 comprend une portion complémentaire d'élasticité 35. Cette dernière est constituée par une boucle du fil qui se situe dans le plan de l'épingle 30.

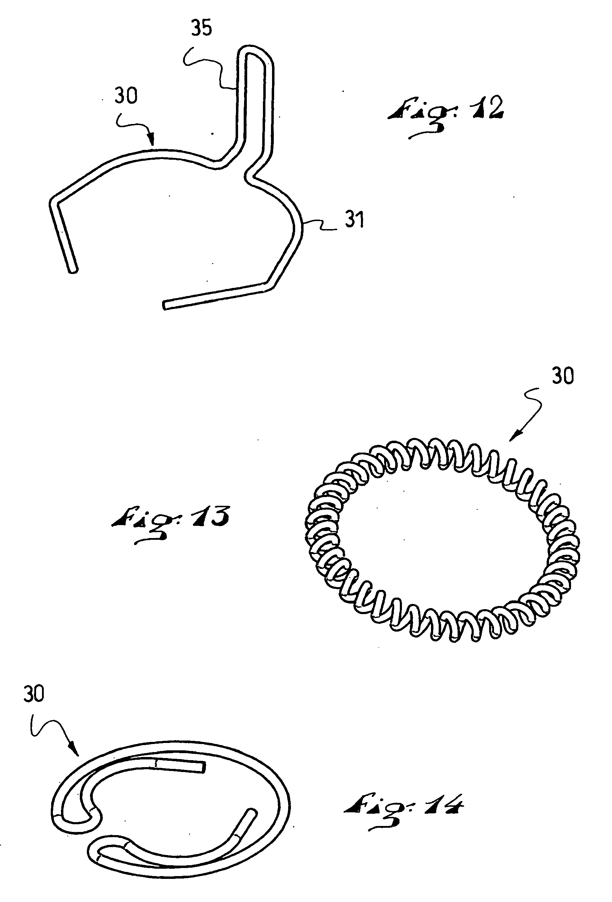

La figure 12 montre également une variante de réalisation de l'épingle 30, laquelle est identique à celle montrée à la figure 11, à la différence près que la portion complémentaire d'élasticité est constituée par une boucle du fil s'étendant dans un plan perpendiculaire au plan de l'épingle, c'est-à-dire au plan contenant les points de contact de l'épingle avec les rondelles.

La figure 13 montre une autre variante de réalisation de l'épingle 30. Celle-ci étant réalisée par un ressort à spirales disposé selon un cercle.

La figure 14 montre une autre variante de réalisation de l'épingle 30 qui se caractérise par une amplitude de déformation plus importante que celle de l'épingle montrée à la figure 10 tout en maintenant un encombrement en volume réduit. En effet, dans cette variante, il n'est pas nécessaire de prévoir une portion complémentaire d'élasticité.

Les modes de réalisation ainsi que les variantes ont été décrits ici à titre d'exemple et l'invention vise à protéger toute réalisation équivalente.

## Revendications

1. Dispositif comportant un arbre interne (3) et un corps extérieur (2) monté rotatif autour d'un axe "A" par rapport audit arbre (3) par l'intermédiaire d'au moins un palier à roulement (4), ledit palier à roulement (4) comprenant une bague intérieure (15) montée sur ledit arbre interne (3) et une bague extérieure (16) montée dans un logement dudit corps extérieur (2),
**caractérisé en ce que** ledit dispositif comprend des moyens d'auto-rattrapage de jeu comprenant une première rondelle comportant une face conique (19), et un élément élastique (20) placé au contact de ladite face conique (19) de ladite première rondelle, ledit élément élastique (20) générant un effort de rappel radial qui est converti, par l'intermédiaire de la face conique (19), en un effort axial pour assurer le rattrapage de jeu du montage dudit palier à roulement (4).

2. Dispositif selon la revendication 1, **caractérisé en ce que** ladite première rondelle est montée sur l'arbre (3) et **en ce que** ledit élément élastique génère une force de rappel centripète.

3. Dispositif selon la revendication 1, **caractérisé en ce que** ladite première rondelle est montée dans l'alésage du corps extérieur (2) et **en ce que** ledit élément élastique génère une force de rappel centrifuge.

4. Dispositif selon l'une des revendications 1 à 3, **caractérisé en ce qu'**il comprend une deuxième rondelle et **en ce que** ledit élément élastique est placé entre ladite première rondelle et ladite deuxième rondelle.

5. Dispositif selon l'une des revendications 1 à 4, **caractérisé en ce que** l'angle que fait la face conique (19) avec le plan perpendiculaire à l'axe "A" est inférieur à 12°.

6. Dispositif selon l'une des revendications 1 à 5, **caractérisé en ce que** l'effort de pincement de l'élément élastique est compris entre 10g et 250g (0,1 N et 2,5 N).

7. Dispositif selon la revendication 1 à 6, **caractérisé en ce que** ledit élément élastique est une épingle (30) comportant une portion de forme sensiblement circulaire.

8. Moyeu pour roue de bicyclette comprenant un dispositif selon l'une des revendications 1 à 7.

9. Roue de bicyclette comportant un moyeu selon la revendication 8.

## Claims

1. Device comprising an internal shaft (3) and an outer body (2) mounted in rotation about an axis "A" with respect to said shaft (3) via at least one rolling bearing (4), said rolling bearing (4) comprising an inner ring (15) mounted on said internal shaft (3) and an outer ring (16) mounted in a housing in said outer body (2),
**characterized in that** said device comprises means for the automatic compensation of play, comprising a first washer having a conical face (19) and an elastic element (20) placed in contact with said conical face (19) of said first washer, said elastic element (20) generating a radial return force which is converted via the conical face (19) into an axial force in order to compensate for play in the mounting of said rolling bearing (4).

2. Device according to Claim 1, **characterized in that** said first washer is mounted on the shaft (3) and **in that** said elastic element generates a centripetal return force.

3. Device according to Claim 1, **characterized in that** said first washer is mounted in the bore in the outer body (2) and **in that** said elastic element generates a centrifugal return force.

4. Device according to one of Claims 1 to 3, **characterized in that** it comprises a second washer and **in that** said elastic element is placed between said first washer and said second washer.

5. Device according to one of Claims 1 to 4, **characterized in that** the angle that the conical face (19) produces with the plane perpendicular to the axis "A" is less than 12°.

6. Device according to one of Claims 1 to 5, **characterized in that** the clamping force of the elastic element is between 10 g and 250 g (0.1 N and 2.5 N).

7. Device according to Claims 1 to 6, **characterized in that** said elastic element is a hairpin (30) having a portion having an approximately circular shape.

8. Bicycle wheel hub comprising a device according to one of Claims 1 to 7.

9. Bicycle wheel having a hub according to Claim 8.

## Patentansprüche

1. Vorrichtung, umfassend eine innere Welle (3) und einen äußeren Körper (2), der mittels mindestens eines Wälzlagers (4) drehbar um eine Achse "A" bezüglich der Welle (3) angebracht ist, wobei das Wälzlager (4) einen auf der inneren Welle (3) angebrachten Innenring (15) und einen in einer Aufnahme des äußeren Körpers (2) angebrachten Außenring (16) enthält,
**dadurch gekennzeichnet, dass** die Vorrichtung Mittel zum automatischen Spielausgleich enthält, die eine erste Scheibe mit einer kegelförmigen Fläche (19) und ein elastisches Element (20), das in Kontakt mit der kegelförmigen Fläche (19) der ersten Scheibe platziert ist, umfassen, wobei das elastische Element (20) eine radiale Rückholkraft erzeugt, die mittels der kegelförmigen Fläche (19) in eine axiale Kraft umgewandelt wird, um Montagespiel des Wälzlagers (4) auszugleichen.

2. Vorrichtung nach Anspruch 1, **dadurch gekennzeichnet, dass** die erste Scheibe auf der Welle (3) angebracht ist und dass das elastische Element eine Zentripetalrückholkraft erzeugt.

3. Vorrichtung nach Anspruch 1, **dadurch gekennzeichnet, dass** die erste Scheibe in der Bohrung des äußeren Körpers (2) angebracht ist und dass das elastische Element eine Zentrifugalrückholkraft erzeugt.

4. Vorrichtung nach einem der Ansprüche 1 bis 3, **dadurch gekennzeichnet, dass** sie eine zweite Scheibe umfasst und dass das elastische Element zwischen der ersten Scheibe und der zweiten Scheibe platziert ist.

5. Vorrichtung nach einem der Ansprüche 1 bis 4, **dadurch gekennzeichnet, dass** der Winkel, den die kegelförmige Fläche (19) mit der senkrecht zur Achse "A" verlaufenden Ebene bildet, kleiner als 12° ist.

6. Vorrichtung nach einem der Ansprüche 1 bis 5, **dadurch gekennzeichnet, dass** die Klemmkraft des elastischen Elements zwischen 10g und 250g (0,1 N und 2,5 N) liegt.

7. Vorrichtung nach den Ansprüchen 1 bis 6, **dadurch gekennzeichnet, dass** das elastische Element eine Klammer (30) ist, die einen im Wesentlichen kreisförmigen Teil umfasst.

8. Nabe für ein Fahrradrad, die eine Vorrichtung nach einem der Ansprüche 1 bis 7 enthält.

9. Fahrradrad, das eine Nabe nach Anspruch 8 enthält.
